# EUROPEAN PATENT APPLICATION

(11) **EP 1 365 208 A1**
(43) Date of publication of application: **26.11.2003**
(21) Application number: 01272341.7
(22) Date of filing: 26.12.2001
(51) Int. Cl.: G01B 7/00, G01D 5/14

(54) **DISPLACEMENT SENSOR**

(30) Priority: 27.12.2000 JP 2000396593
(71) Applicant: Kabushiki Kaisha Bridgestone, Chuo-ku, Tokyo 104-8340 (JP)
(72) Inventor: IMAMURA, Yoshinori, Bunkyo-ku, Tokyo 113-0033 (JP)
(74) Representative: Whalley, Kevin
(86) International application number: JP0111515
(87) International publication number: WO02052221

(57) **Abstract**

A displacement sensor comprising a board-like magnet 20 mounted on an object 10 to be measured and magnetized in a thickness direction, a first Hall element 21, arranged opposite near the center of the pole face 20a as an XY plane of the magnet 20, for detecting a component parallel to the Z axial direction which is the thickness direction of the magnet 20 of a magnetic field from the magnet 20, and a second Hall element 22, arranged on a side opposite to the magnet 20 of the first Hall element 21, for detecting a component parallel to the X axial direction of the magnetic field from the magnet 20 so that it can detect displacements in two axial directions (X axis and Y axis) of the object 10 to be measured at the same time efficiently and accurately.

## Description

### Background of the Invention

### [Field of the Invention]

The present invention relates to a displacement sensor which comprises Hall elements and, specifically, to a displacement sensor for detecting displacement in two axial directions or three axial directions at the same time.

### [Description of the Prior Art]

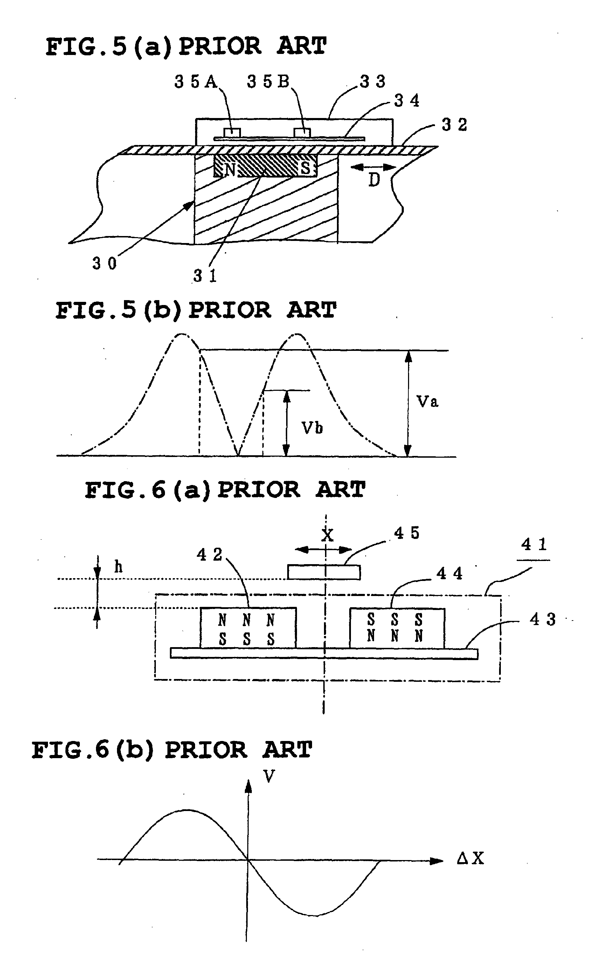

Displacement sensors and position detection sensors comprising Hall elements have been widely used as means of measuring the displacement or position of an object to be measured. Fig. 5(a) shows the constitution of a position detection sensor disclosed by Japanese Laid-open Patent Application No. 09-231889, which detects the position of a piston 30 as an object to be measured by burying a permanent magnet 31 in the piston 30 and detecting a magnetic field from the above permanent magnet 31 with two Hall elements 35A and 35B mounted on a substrate 34 in a housing 33 provided around a cylinder tube 32 with a predetermined space therebetween. That is, as the piston 30 moves in a direction D in Fig. 5(a), the above Hall element 35A detects a magnetic field coming out from the surface of the above cylinder tube 32 to output a positive voltage shown by a one-dot chain line in Fig. 5(b) and the above Hall element 35B detects a magnetic field coming out from the surface of the above cylinder tube 32 to output a positive voltage shown by a two-dot chain line in Fig. 5(b). Therefore, the position of the above piston 30 can be detected accurately by obtaining the difference between the Hall voltages Vₐ and v_{b} output from the above Hall elements 35A and 35B.

Fig. 6(a) shows the constitution of a displacement sensor disclosed by Japanese Laid-open Patent Application No. 07-105809. This displacement sensor detects a magnetic field from a magnetic field generator 41, which is an object to be detected having two permanent magnets 42 and 44 arranged in a displacement direction X with a predetermined space therebetween and connected to a magnetic body 4, with a Hall element 45 which slides relative to the above magnetic field generator 41 in the displacement direction X and is arranged opposite to the above permanent magnets 42 and 44. As shown in Fig. 6(b), since the output V of the above Hall element 45 changes according to the amount of displacement □X relative to the magnetic field generator 41 and the Hall element 45, the above amount of displacement □X is detected.

The signs of the output voltages of the above Hall elements 35A, 35B and 45 can be suitably selected according to a detection method because the output voltages change according to the direction of a magnetic field applied to the above Hall elements 35A, 35B and 45 and the direction of a control current to be applied.

The conventional displacement sensors and position detection sensors comprising Hall elements detect a displacement only in one direction of the above object to be measured using a permanent magnet as magnetic field generating means mounted to the object to be measured and one or more Hall elements for detecting a component in a predetermined direction of a magnetic field from the above permanent magnet. Since the output of the Hall element 45 in Figs. 6(a) and 6 (b) , for example, changes when h varies, a magnetic field component in the X direction and a magnetic field component in the h direction cannot be detected separately. That is, when displacements in two axial directions or three axial directions of an object to be measured are to be measured at the same time, two pairs or three pairs of the above permanent magnets and Hall elements must be prepared to measure the displacement in each axial direction of the object separately.

However, since it is difficult to mount a plurality of permanent magnets which differ from one another in magnetization direction to a predetermined area of the object to be measured in such a manner that their magnetic fields do not interfere with one another, pairs of permanent magnets and Hall elements for detecting displacements in respective axial directions must be mounted to the object at positions separate from one another. When the whole object is not rigid, the measurement of displacement at a plurality of suitable sites of the object is pointless. Therefore, a displacement in each axial direction must be detected by installing two pairs or three pairs of permanent magnets and Hall elements at the displacement measuring sites, whereby a large space is necessary as in the above case.

Accordingly, when there is not an enough space at the displacement measuring sites of the object to be measured, it is difficult to measure displacements in two axial directions or three axial directions in a predetermined area of the object to be measured accurately.

### Summary of the Invention

In view of the problem of the prior art, it is an object of the present invention to provide a displacement sensor capable of measuring displacements in two axial directions or three axial directions in a narrow area of an object to be measured efficiently and accurately.

According to a first aspect of the present invention, there is provided a displacement sensor which comprises a board-like magnet mounted on an object to be measured and magnetized in the thickness direction, a first Hall element, arranged opposite near the center of the pole face as the XY plane of the magnet, for detecting a component parallel to the Z axial direction which is the thickness direction of the magnet of a magnetic field from the magnet, and a second Hall element, arranged on the side opposite to the above magnet of the first Hall element, for detecting a component parallel to the X axial direction of the magnetic field from the magnet so that it can detect the displacements in two axial directions (X and Z axes) of the object to be measured at the same time.

According to a second aspect of the present invention, there is provided a displacement sensor, wherein the magnet is longer in the X axial direction than the Y axial direction to improve the detection accuracy in the Z axial direction, that is, increase the area not affected by a displacement in the X direction.

According to a third aspect of the present invention, there is provided a displacement sensor which further comprises a third Hall element, arranged above or below the first Hall element, for detecting a component parallel to the Y axial direction of a magnetic field from the magnet in addition to the above second Hall element in order to enable the displacements in three axial directions of the object to be measured to be detected at the same time.

### Brief Description of the Drawings

Fig. 1 is a diagram showing the constitution of a displacement sensor according to an embodiment of the present invention;
Fig. 2 is a diagram showing the direction of a magnetic field from a magnet and the installation position of a first Hall element;
Fig. 3 is a diagram showing the direction of the magnetic from the magnet and the installation position of a second Hall element;
Fig. 4 is a diagram showing the constitution of a displacement sensor for detecting displacements in three axial directions according to the present invention;
Figs. 5(a) and 5(b) are diagrams showing the constitution of a position detection sensor of the prior art; and
Fig. 6(a) and 6(b) are diagrams showing the constitution of a displacement sensor of the prior art.

### Detailed Description of the Preferred Embodiments

Preferred embodiments of the present invention will be described hereinbelow with reference to the accompanying drawings.

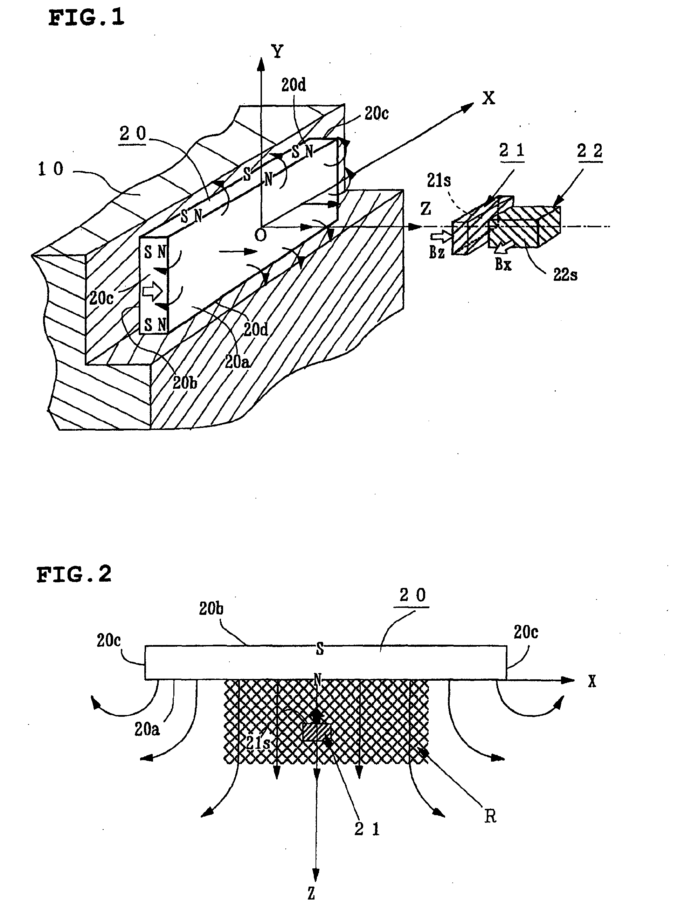

Fig. 1 is a diagram showing the constitution of a displacement sensor according to an embodiment of the present invention. In Fig. 1, reference numeral 10 denotes an object to be measured, and 20 a rectangular board-like magnet (permanent magnet) which is installed at the displacement measuring site of the object 10 to be measured and magnetized in a thickness direction with its front side magnetized N pole and rear side magnetized S pole. To clarify the positional relationship, the front side is designated as a pole face 20a, the rear side is designated as a pole face 20b, the center of the pole face 20a is designated as the origin O, and the above pole face 20a and pole face 20b are parallel to the XY plane.

Denoted by 21 is a first Hall element which is arranged opposite to the center portion (origin O) of the pole face 20a with a predetermined space between it and the magnet 20 in the Z axial direction which is the thickness direction of the magnet 20, and 22 a second Hall element which is arranged on the side opposite to the above magnet 20 of the above first Hall element 21 in the Z axial direction with a predetermined space between it and the first Hall element 21.

In this embodiment, the displacement of a sample which is displaced more in the X axial direction than the Y axial direction is measured. In order to detect a magnetic field component in the Z axial direction, the above magnet 20 is made longer in the X axial direction than the Y axial direction so that an area not affected by a displacement in the X direction can be made large.

As shown in Fig. 1, the direction of a magnetic field from the above magnet 20 is the Z axial direction almost perpendicular to the pole face 20a in an area having a short distance from the pole face 20a except its peripheral portion, and the line of magnetic force of the above magnet 20 goes toward the side face 20c parallel to the YZ plane and the side face 20d parallel to the ZX plane as the distance from the pole face 20a increases, thereby increasing a magnetic field component in the X axial direction or Y axial direction.

In this embodiment, the magnetic field applied face 21s perpendicular to the direction of the magnetic field to be detected of the first Hall element 21 is arranged parallel to the XY plane, the above first Hall element 21 is mounted almost in the center of an area R where the direction of the magnetic field is substantially the Z axial direction as shown by a net portion of Fig. 2, and further a control current is applied to the plane (for example, the X axial direction) parallel to the above magnetic field applied face 21s to detect a component parallel to the Z axial direction of the magnetic field from the magnet 20.

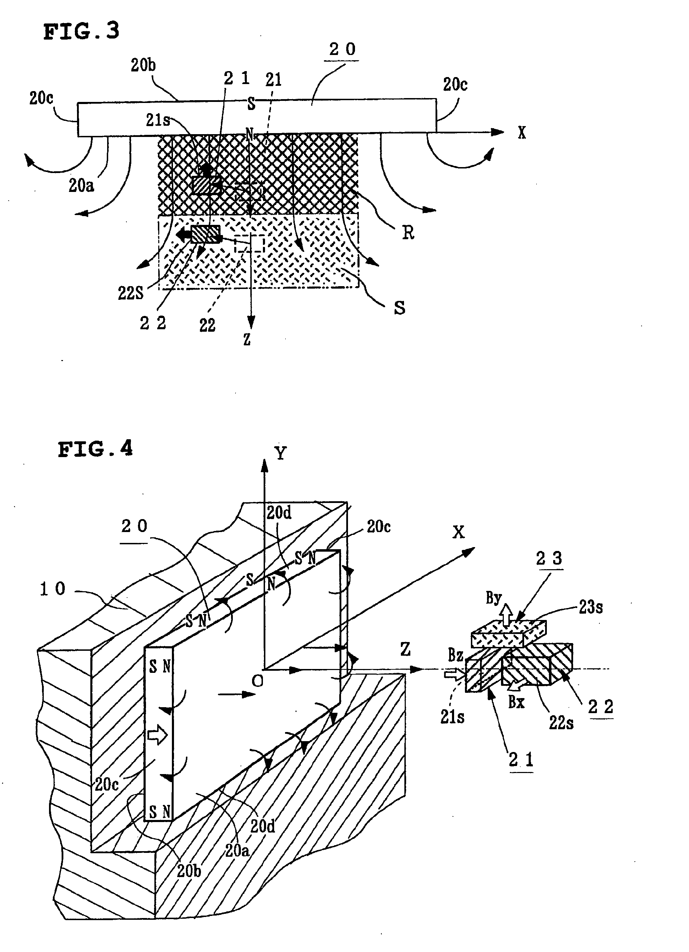

As shown in Fig. 3, outside the above area R, there is an area S where the direction of the line of magnetic force is substantially on the ZX plane and the X component of the above magnetic field has substantially the same value at a position having the same X coordinate.

Then, the magnetic field applied face 22s of the second Hall element 22 is arranged parallel to the YZ plane and installed almost in the center of the above area S behind the first Hall element 21 and further a control current is applied to a plane (for example, Y axial direction) parallel to the above magnetic field applied face 22s to detect a component parallel to the X axial direction of the magnetic field from the magnet 20.

When the object 10 to be measured is displaced on the ZX plane, a displacement in the Z axial direction and a displacement in the X axial direction can be detected by the first Hall element 21 and the second Hall element 22, respectively. Thus, displacements in two axial directions at the displacement measuring site of the object 10 to be measured can be detected at the same time and separately simply by installing one magnet 20 at that site. More specifically, since the direction of the magnetic field from the above magnet 20 is substantially the Z direction when the object 10 to be measured is displaced on the XZ plane while the first Hall element 21 is in the above area R, the above first Hall element 21 detects only a displacement in the Z axial direction regardless of the amount of a displacement in the X axial direction. The second Hall element 22 detects only a displacement in the X axial direction regardless of the amount of a displacement in the Z axial direction because it is in the area S where the X component does not change even when the Z component of the magnetic field changes.

As the Hall elements 21 and 22 are small-sized elements, they can measure displacements in two axial directions of a narrow area of the object 10 to be measured efficiently and accurately.

In the above embodiment, the above magnet 20 is made rectangular in order to measure the displacement of a sample whose displacement in the Y axial direction is smaller than displacement in the X axial direction very accurately. Even when it is square, the amounts of displacements in two axial directions can be detected fully. The above magnet 20 is not limited to a rectangular or square shape but preferably symmetrical about the X axis or Y axis in order to obtain the same voltage value for the amounts of displacements in upward and downward directions or left and right directions.

As shown in Fig. 4, displacements in three X, Y and Z axial directions of the object 10 to be measured can be measured at the same time and separately by installing a third Hall element 23 above the first Hall element 21 to detect a component parallel to the Y axial direction of the magnetic field from the above magnet 20.

More specifically, the above third Hall element 23 is arranged such that its magnetic field applied face 23s become parallel to the ZX plane and a control current is applied to the plane (for example, Z axial direction) parallel to the above magnetic field applied face 23s to detect a component parallel to the Y axial direction of the magnetic field from the magnet 20.

The arrangement of the above first, second and third Hall elements 21, 22 and 23 is not limited to the above. For example, the third Hall element 23 may be situated below the first Hall element 21. Further, even when the third Hall element 23 is arranged opposite to the center portion of the pole face 20a, the first Hall element 21 is placed above or below the above third Hall element 23, and the second Hall element 22 is arranged behind the above third Hall element 23, the amounts of displacements in the X, Y and Z axial directions of the object 10 to be measured can be measured at the same time.

### Industrial Feasibility

As described above, according to the present invention, the displacement sensor comprises a board-like magnet magnetized in the thickness direction and mounted on the object to be measured, a first Hall element, arranged opposite near the center of the pole face, for detecting a component parallel to the Z axial direction of a magnetic field from the above magnet, and a second Hall element, arranged on the side opposite to the above magnet of the above first Hall element with a predetermined space between it and the above first Hall element, for detecting a component parallel to the X axial direction of the magnetic field from the above magnet so that it can detect a displacement in the X axial direction and a displacement in the Z axial direction of the object to be measured at the same time. Therefore, displacements in two axial directions of a narrow area of the object to be measured can be measured efficiently and accurately.

Further, a third Hall element for detecting a component parallel to the Y axial direction of the magnetic field from the above magnet is arranged above or below the above first Hall element with a predetermined space between it and the above first Hall element so that displacements in three axial directions of the object to be measured can be detected at the same time.

## Claims

1. A displacement sensor comprising:
a board-like magnet mounted on an object to be measured and magnetized in a thickness direction;
a first Hall element, arranged opposite near the center of the pole face as an XY plane of said magnet, for detecting a component parallel to the Z axial direction which is the thickness direction of said magnet of a magnetic field from said magnet; and
a second Hall element, arranged on a side opposite to said magnet of said first Hall element, for detecting a component parallel to the X axial direction of the magnetic field from said magnet.

2. The displacement sensor of claim 1, wherein said magnet is made longer in the X axial direction than the Y axial direction.

3. The displacement sensor of claim 1 which further comprises a third Hall element, arranged above or below said first Hall element, for detecting a component parallel to the Y axial direction of the magnetic field from said magnet.
